# EUROPEAN PATENT APPLICATION

(11) **EP 1 326 037 A1**
(43) Date of publication of application: **09.07.2003**
(21) Application number: 02000121.0
(22) Date of filing: 03.01.2002
(51) Int. Cl.: F16J 15/34

(54) **Rotation axis seal device and helium gas turbine power generation system using the same**

(71) Applicant: Mitsubishi Heavy Industries, Ltd., Tokyo (JP)
(72) Inventor: Akazawa, Itsuo Nagasaki Shipyard & Mach. Works, Nagasaki, Nagasaki-ken (JP); Hiromoto, Akira, Mitsubishi Heavy Ind. Ltd., Nagasaki, Nagasaki-ken (JP); Tsutsumi, Takanori, Mitsubishi Heavy Ind. Ltd., Nagasaki, Nagasaki-ken (JP); Maekawa, Kazuhiko, Mitsubishi Heavy Ind. Ltd., Nagasaki, Nagasaki-ken (JP)
(74) Representative: Henkel, Feiler, Hänzel

(57) **Abstract**

An axis seal device (8) is provided between a vessel (3) filled with a first gas of a first gas pressure and a rotation axis (6) passing through the vessel (3). The axis seal device (8) includes first (22) to third (39) dry gas seal sections. The first dry gas seal section (22) is provided such that the rotation axis (6) is rotatable, and has a first space (21) section with a second gas pressure. The second dry gas seal section (32) is provided subsequently to the first dry gas seal section (22) such that the rotation axis (6) is rotatable, and has a second space section (36) with a third gas pressure. The third dry gas seal section (39) is provided subsequently to the second dry gas seal section (32) such that the rotation axis (6) is rotatable, and has a third space section (40) with a fourth gas pressure. The first gas pressure is lower than the second gas pressure, the second gas pressure is higher than the third gas pressure, the third gas pressure is higher than the fourth gas pressure and an atmospheric pressure, and the fourth gas pressure is lower than the atmospheric pressure.

## Description

### Background of the Invention

### 1. Field of the Invention

The present invention relates to a rotation axis seal device and a helium gas turbine power generation system, which uses the shaft seal device and generates electric power by rotating a gas turbine using helium gas.

### 2. Description of the Related Art

As one of atomic generation systems, a helium gas turbine power generation system is developed. In the helium gas turbine power generation system, helium gas is used as a primary system gas supplied from a high temperature gas reactor like a nuclear reactor, and a gas turbine is rotated with the helium gas to generate electric power.

In such a helium gas turbine power generation system, it is necessary that the primary system helium gas does not leak out outside. Therefore, in a conventional helium gas turbine power generation system, a gas turbine and a generator are accommodated in a pressure vessel in which the primary system helium gas is circulated. Because the pressure vessel is radioactively polluted with the primary system helium gas, a lot of processes are needed for the maintenance of the pressure vessel.

Generally, it is desired to make a gas turbine and a generator large in size for the high efficiency of power generation. However, if the gas turbine and the generator are made large in size, a large pressure vessel is needed, and more processes are needed for the maintenance of the pressure vessel.

### Summary of the Invention

Therefore, an object of the present invention is to provide a helium gas turbine power generation system, in which a pressure vessel can be made small in size.

Another object of the present invention is to provide a helium gas turbine power generation system in which a turbine is arranged in a pressure vessel and a generator is arranged outside the pressure vessel.

Still another object of the present invention is to provide a rotation axis seal device which can prevent the leakage of gas in a rotary shaft.

In an aspect of the present invention, an axis seal device is provided between a vessel filled with a first gas of a first gas pressure and a rotation axis as a rotary shaft which passes through the vessel. The axis seal device includes first to third dry gas seal sections. The first dry gas seal section is provided between the rotation axis and the vessel such that the rotation axis is rotatable, and has a first space section with a second gas pressure. The second dry gas seal section is provided subsequently to the first dry gas seal section between the rotation axis and the vessel such that the rotation axis is rotatable, and has a second space section with a third gas pressure. The third dry gas seal section is provided subsequently to the second dry gas seal section between the rotation axis and the vessel such that the rotation axis is rotatable, and has a third space section with a fourth gas pressure. The first gas pressure is lower than the second gas pressure, the second gas pressure is higher than the third gas pressure, the third gas pressure is higher than the fourth gas pressure and an atmospheric pressure, and the fourth gas pressure is lower than the atmospheric pressure.

The first dry gas seal section may include a first gas pressure control section which controls the second gas pressure such that the second gas pressure is higher than the first gas pressure. In this case, the first gas pressure control section may include a first pressure sensor provided in the vessel to sense the first gas pressure; a second pressure sensor provided in the first space section to sense the second gas pressure; a gas supply unit which supplies gas of a gas pressure higher than the second gas pressure into the first space section; and a valve connected with the first space section and the gas supply unit. A first control section controls the valve for the gas supply unit to supply the gas into the first space section based on the first gas pressure sensed by the first pressure sensor and the second gas pressure sensed by the second pressure sensor such that the second gas pressure is higher than the first gas pressure. The first control section controls the valve based on the first gas pressure sensed by the first pressure sensor and the second gas pressure sensed by the second pressure sensor for the gas supply unit to supply the gas into the first space section to have a hysteresis characteristic in a predetermined first range.

Also, the first space section may defined by the rotation axis, a wall of the axis seal device, a first dry gas seal and a second dry gas seal, and the first dry gas seal is opened to an inside of the vessel, and the second dry gas seal is shared by the second space section.

Also, the third dry gas seal section may include a third gas pressure control section which controls the fourth gas pressure such that the fourth gas pressure is lower than the third gas pressure and the atmospheric pressure. In this case, the third gas pressure control section may include a fourth pressure sensor provided in the third space section to sense the fourth gas pressure; and a gas exhausting unit connected the third second space section. A third control section controls the gas exhausting unit based on the fourth gas pressure sensed by the fourth pressure sensor such that the fourth gas pressure is lower than the third gas pressure and the atmospheric pressure. In this case, the third control section controls the gas exhausting unit to have a hysteresis characteristic in a predetermined third range based on the fourth gas pressure sensed by the fourth pressure sensor such that the fourth gas pressure is lower than the third gas pressure and the atmospheric pressure.

Also, the third space section may be defined by the rotation axis, a wall of the axis seal device, a third dry gas seal and a labyrinth seal, and the labyrinth seal is opened to atmosphere, and the third dry gas seal is shared by the second space section.

Also, the second dry gas seal section may include a second gas pressure control section which controls the third gas pressure such that the third gas pressure is lower than the second gas pressure and higher than the atmospheric pressure. At this time, the second gas pressure control section may include a third pressure sensor provided in the second space section to sense the third gas pressure; and a gas recirculation unit which recirculates gas from the second space section into the first space section. A second control section controls the gas recirculation unit based on the third gas pressure sensed by the third pressure sensor such that the third gas pressure is lower than the second gas pressure and higher than the atmospheric pressure. In this case, the second control section controls the gas recirculation unit to have a hysteresis characteristic in a predetermined second range based on the third gas pressure sensed by the third pressure sensor such that the third gas pressure is lower than the second gas pressure and always higher than the atmospheric pressure.

Also, the second space section may be defined by the rotation axis, a wall of the axis seal device, a second dry gas seal and a third dry gas seal, and the second dry gas seal is shared by the first space section and the third dry gas seal is shared by the third space section.

Also, the second dry gas seal section may include N dry gas seal subsections (N is an integer more than 1) connected in series, and the second space section may include N space subsections. An M-th(2≦M ≦N) one of the N dry gas seal subsections may include: a M-th space subsection; and a second gas pressure control section which controls an M-th gas pressure of the M-th space subsection such that the M-th gas pressure of the M-th space subsection is lower than an (M-1)-th gas pressure of an (M-1)-th space subsection and higher than an (M+1)-th gas pressure of an (M+1)-th space subsection and the atmospheric pressure. At this time, the M-th gas pressure control section may include: a M-th pressure sensor provided in the M-th space subsection to sense the M-th gas pressure; and a M-th gas recirculation unit which recirculates gas from the M-th space subsection into the (M-1)-th space subsection. An M-th control section controls the M-th gas recirculation unit based on the M-th gas pressure sensed by the M-th pressure sensor such that the M-th gas pressure of the M-th space subsection is lower than an (M-1)-th gas pressure of an (M-1)-th space subsection and higher than an (M+1)-th gas pressure of an (M+1)-th space subsection and the atmospheric pressure. In this case, the M-th control section controls the M-th gas recirculation unit to have a hysteresis characteristic in a predetermined range based on the M-th gas pressure sensed by the M-th pressure sensor such that the M-th gas pressure of the M-th space subsection is lower than an (M-1)-th gas pressure of an (M-1)-th space subsection and higher than an (M+1)-th gas pressure of an (M+1)-th space subsection and the atmospheric pressure.

Also, the M-th space subsection may be defined by the rotation axis, a wall of the axis seal device, an (M-1)-th dry gas seal and an M-th dry gas seal, and the (M-1)-th dry gas seal is shared by the (M-1)-th space subsection and the M-th dry gas seal is shared by the (M+1)-th space section.

In the above, the gas may be a helium gas, and is in a temperature range of 700 °C to 1000 °C.

In another aspect of the present invention, a gas turbine power generation system may include: a gas reactor which heats up the gas to produce a hot gas; the vessel connected to the gas reactor; a turbine accommodated in the vessel and rotated by the hot gas; a separator member provided for the vessel and the turbine to separate an inside of the vessel into first and second portions; a power generator provided outside the vessel and connected to the turbine by the rotation axis; and the axis seal device described above, provided between the rotation axis and the vessel.

In this case, the gas turbine power generation system may further include a circulating unit which circulates the hot gas from the second portion into the first portion.

Also, in still another aspect of the present invention, a method of sealing between a first portion filled with a gas and a second portion in atmosphere, is achieved by providing first to third space sections between the first portion and the second portion; by controlling a second gas pressure in the first space section to be higher than a first gas pressure in a first portion; by controlling a third gas pressure in the second space section to be lower than a fourth gas pressure in the third space section and to be higher than an atmospheric pressure; and by controlling the fourth gas pressure to be lower than the atmospheric pressure.

In this case, a first dry gas seal is provided between the first portion and the first space section, a second dry gas seal is provided between the first space section and the second space section, and a third dry gas seal is provided between the second space section and the third space section.

### Brief Description of the Drawings

Fig. 1 is a schematic diagram showing a helium turbine power generation system of the present invention;
Fig. 2 is a block diagram showing the structure of a turbine and a generator in the helium turbine power generation system of the present invention;
Fig. 3 is a block diagram showing the structure of an axis seal device of the present invention;
Fig. 4 is a block diagram showing the structure of a first dry gas seal;
Fig. 5 is a graph showing a relation of pressure difference data and the control state of a pressure regulating valve by a first controller;
Fig. 6 is a graph showing a relation of a pressure measured by a third pressure sensor and the control state of a helium gas recirculation compressor by a second controller;
Fig. 7 is a graph showing a relation of a pressure measured by a fourth pressure sensor in a first example of the control operation of a vacuum suction unit by the third controller and the control state of the vacuum suction unit by a third controller; and
Fig. 8 is a graph showing a relation of the pressure measured by a fourth pressure sensor in a second example of the control operation of the vacuum suction unit by the third controller and the control state of the vacuum suction unit by the third controller.

### Description of the Preferred Embodiments

Hereinafter, the helium turbine power generation system of the present invention will be described with reference to the attached drawings.

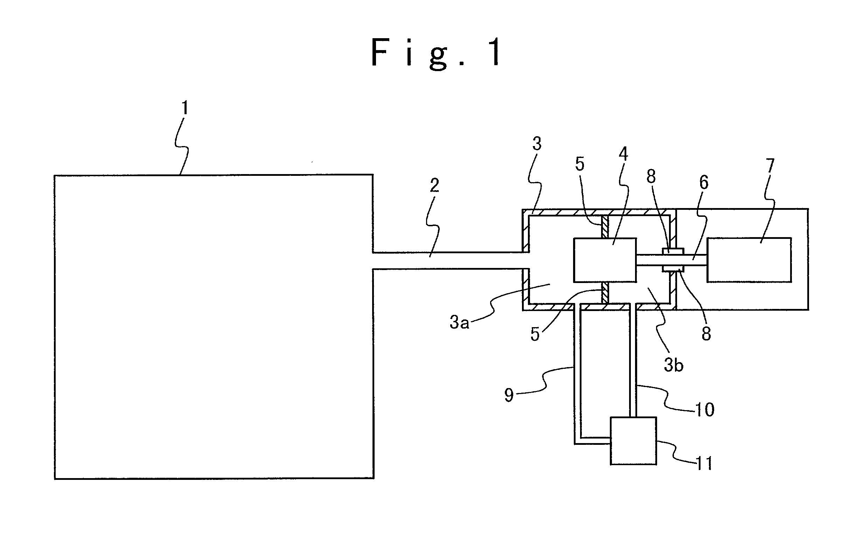

Fig. 1 is a schematic diagram showing the structure of the helium gas turbine power generation system of the present invention. Referring to Fig. 1, the helium gas turbine power generation system of the present invention contains a high temperature gas reactor 1 which supplies hot helium gas in a temperature range of 700 °C to 1,000 °C to a pressure vessel 3 through a pipe 2.

The turbine 4 is accommodated in the pressure vessel 3. A separation member 5 is provided to separate the internal space of the pressure vessel 3 around the turbine 4 into a first portion 3a as an inner circumference section and a second portion 3b as an outer circumference section. The first portion 3a is connected with the pipe 2, but the second portion 3b is not connected with the pipe 2. Therefore, the helium gas is supplied from the high temperature gas reactor 1 to the first portion 3a through the pipe 2, passes through the turbine 4 and then is supplied to the second portion 3b. In this way, the turbine 4 with turbine blades (not shown) is rotated with the hot helium gas supplied from the high temperature gas reactor 1 into the turbine 4.

Also, the turbine 4 is connected with a generator 7 by a rotation axis 6 as a rotary shaft. The generator 7 is arranged outside the pressure vessel 3, and the rotation axis 6 penetrates the wall of the pressure vessel 3. An axis seal device 8 is provided between the pressure vessel 3 and the rotation axis 6. The axis seal device 8 does not prevent the rotation of the rotation axis 6 and has a function to prevent the helium gas circulating in the pressure vessel 3 from leaking out from the pressure vessel 3. The structures of the rotation axis 6 and axis seal device 8 will be described later in detailed.

Moreover, the helium turbine power generation system is further composed of a pipe 9 for connecting the first portion 3a and a heat exchanger 11, and a pipe 10 for connecting the second portion 3b and the heat exchanger 11. The heat exchanger 11 acquires the helium gas supplied to the second portion 3b through the pipe 10 and cools the helium gas, and then supplies it to a pressurizing section (not shown). The helium gas pressurized by the pressurizing section (not shown) is supplied to the first portion 3a through the pipe 9.

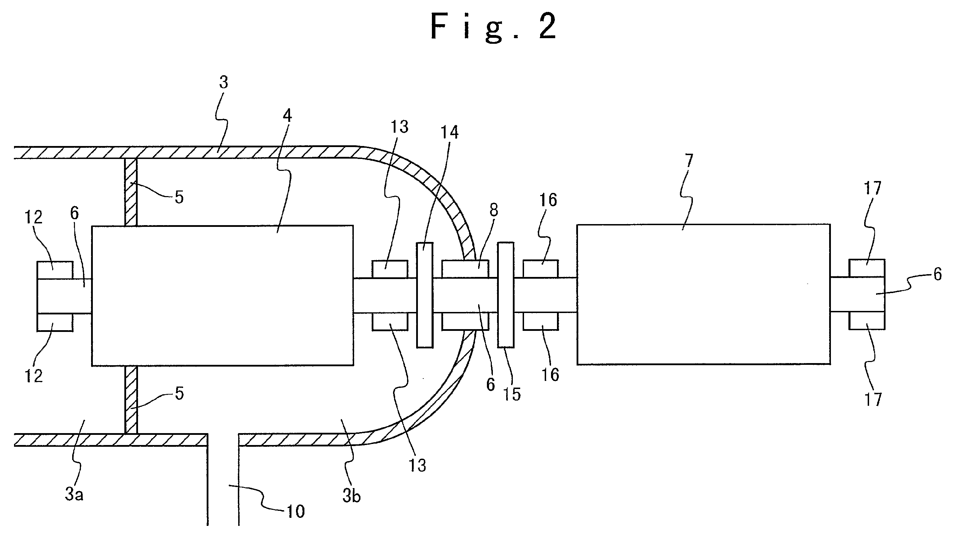

Next, the rotation axis 6 will be described in detail. Fig. 2 shows the structure of the turbine 4 and the generator 7 in the helium turbine power generation system of the present invention. Referring to Fig. 2, the rotation axis 6 passes through the pressure vessel 3 and couples the turbine 4 and the generator 7. The turbine 4 is provided in the pressure vessel 3 to be exposed in the helium gas. The generator 7 is arranged in the atmosphere outside the pressure vessel 3.

The rotation axis 6 is composed of rotation axis portions 6-1, 6-2 and 6-3. The rotation axis portion 6-1 is rotatably supported by a magnetic bearing 12 in the first portion 3a of the pressure vessel 3, passes through the turbine 4, and is rotatably supported by a magnetic bearing 13 in the second portion 3b of the pressure vessel 3. The rotation axis portion 6-2 is rotatably supported by an axis seal device 8 which is fit to the pressure vessel 3. The rotation axis portion 6-3 is rotatably supported by an oil bearing 16, passes through the generator 7, and is rotatably supported by an oil bearing 17. The rotation axis 6-1 and the rotation axis 6-2 are connected by a diaphragm coupling 14 and the rotation axis 6-2 and the rotation axis 6-3 are connected by a diaphragm coupling 17.

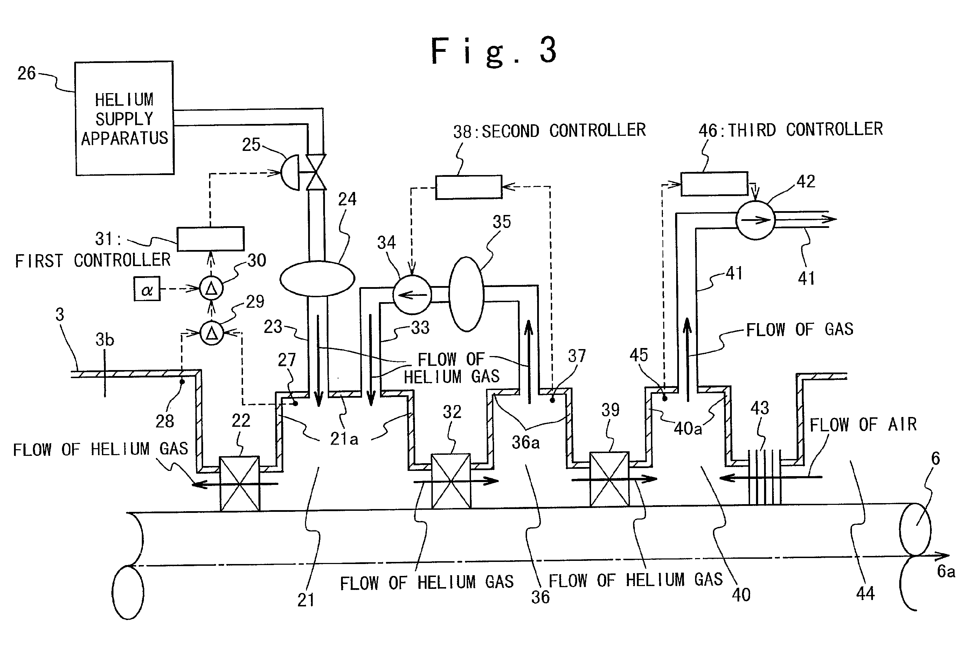

Next, the axis seal device 8 will be described in detail. Fig. 3 shows the structure of the axis seal device 8 of the present invention. Referring to Fig. 3, the axis seal device 8 of the present invention has a first space section 21, a second space section 36 and a third space section 40.

The first space section 21 is provided as a region defined by the outer circumference surface of the rotation axis 6, a first wall section 21a, and first and second dry gas seals 22 and 32. The first dry gas seal 22 is connected to the wall of the pressure vessel 3. The second space section 36 is provided as a region defined by the outer circumference surface of the rotation axis 6, a second wall section 36a, the second dry gas seal 32 and a third dry gas seal 39. The third space section 40 is provided as a region defined by the outer circumference surface of the rotation axis 6, a third wall section 40a, the third dry gas seal 39 and a labyrinth seal 43. The labyrinth seal 43 is connected to a wall which has an opening to the atmosphere.

The first space section 21 is filled with the helium gas. It is supposed that the gas pressure of the helium gas is P₁. The first pipe 23 passes through the first wall section 21a and is connected with the first space section 21. Thus, the first space section 21 is connected with a helium supply apparatus 26 by the first pipe 23 through a helium gas buffer tank 24 and a pressure regulating valve 25. The helium gas buffer tank 24 is used to change the gas pressure P₁ of the helium gas in the first space section 21 rapidly. The pressure regulating valve 25 can be opened or closed in accordance with an open or close instruction from a first controller 31 to be described later. The helium supply apparatus 26 has a function to supply the helium gas of high-pressure (P₀) much higher than the gas pressure P₁ of the helium gas in the first space section 21 to the first space section 21 when the pressure regulating valve 25 is opened.

Also, a first pressure sensor 27 is provided in the first space section 21 to measure the pressure P₁ of the helium gas in the first space section 21. Moreover, a second pressure sensor 28 is provided in the second portion 3b of the pressure vessel 3 to measure the pressure (P₂) of the helium gas in the second portion 3b. The first pressure sensor 27 and the second pressure sensor 28 are connected with a first subtractor 29. The first subtractor 29 is connected with a pressure difference setting unit 30. The first subtractor 29 subtracts the pressure P₂ measured by the second pressure sensor 28 from the pressure P₁ measured by the first pressure sensor 27, and transmits the pressure difference data indicating the pressure difference (P₁-P₂) to the pressure difference setting unit 30. The pressure difference setting unit 30 is connected with the first controller 31. The pressure difference setting unit 30 subtracts a predetermined pressure α (α>0) from the pressure difference (P₁-P₂) and transmits the pressure difference data indicating the difference pressure (P₁-P₂-α) to the first controller 31. The first controller 31 controls the open or close of the pressure regulating valve 25 to always satisfy a pressure relation of P₁ > P₂ based on the difference pressure data (P₁-P₂-α) transmitted from the pressure difference setting unit 30. Therefore, a little volume of helium gas always passes through the first dry gas seal 22 and flows from the first space section 21 into the second portion 3b of the pressure vessel 3. The details of the control of the open and close of the pressure regulating valve 25 by the first controller 31 will be described later.

Also, the second space section 36 is filled by the helium gas. It is supposed that the gas pressure of the helium gas is P₃. The second space section 36 is connected with the second pipe 33 which passes through the second wall section 36a. The second pipe 33 extends from the second space section 36 through a buffer tank 35 for helium gas recirculation and a helium gas recirculation compressor 34, passes through the first wall section 21a and is connected with the first space section 21. The buffer tank 35 for helium gas recirculation prevents the rapid change in the gas pressure P₃ of the helium gas in the second space section 36. Also, the helium gas recirculation compressor 34 has a function to collect and compress the helium gas in the second space section 36 and the buffer tank 35 for the helium gas recirculation and to supply the compressed helium gas to the first space section 21 through the second pipe 33. The helium gas compression operation by the helium gas recirculation compressor 34 is controlled by a second controller 38 connected with the helium gas recirculation compressor 34. The second controller 38 is connected with a third pressure sensor 37 provided in the second space section 36 to measure the pressure P₃ of the helium gas in the second space section 36. The second controller 38 controls the operation of the helium gas recirculation compressor 34 such that the pressure P₃ measured by the third pressure sensor 37 is lower than the gas pressure P₁ in the first space section 21 and is higher than the atmospheric pressure Pₐ. Therefore, a little volume of helium gas always passes through the second dry gas seal 32 and flows from the first space section 21 to the second space section 36. The details of the control of the operation of the helium gas recirculation compressor 34 by the second controller 38 will be described later.

Also, the atmosphere exists in a region 44 outside the third space section 40 and the atmospheric pressure is Pₐ. The third space section 40 is connected with a third pipe 41 through the third wall section 40a. The third pipe 41 connects the third space section 40 with a gas processing apparatus (not shown) through a vacuum suction unit 42. The vacuum suction unit 42 has a function to supply gas from the third space section 40 to the gas processing apparatus. The vacuum suction unit 42 is controlled by a third controller 46 connected with the vacuum suction unit 42. The third controller 46 is connected with a fourth pressure sensor 45 provided to measure the pressure P₄ of the gas in the third space section 40. The third controller 46 controls an operation of the vacuum suction unit 42 such that the pressure P₄ measured by the fourth pressure sensor 45 is lower than the gas pressure P₃ in the second space section 36 and the atmospheric pressure Pₐ. The details of the control of the operation of the vacuum suction unit 42 by the third controller 46 will be described later.

As described above, the pressure P₄ of gas in third space section 40 is controlled to be lower than the atmospheric pressure Pₐ. Therefore, a little volume of air always passes through the labyrinth seal 43 and flows from the region 44 outside the third space section 40 into the third space section 40. Also, the pressure P₄ in the third space section 40 is controlled to be lower than the gas pressure P₃ in the second space section 36. Therefore, a little volume of helium gas passes through the third dry gas seal 39 and flows from the second space section 36 into the third space section 40. Thus, a mixture gas of the air and the helium gas is in the third space section 40.

The structure and function of the first dry gas seal 22 will be described below.

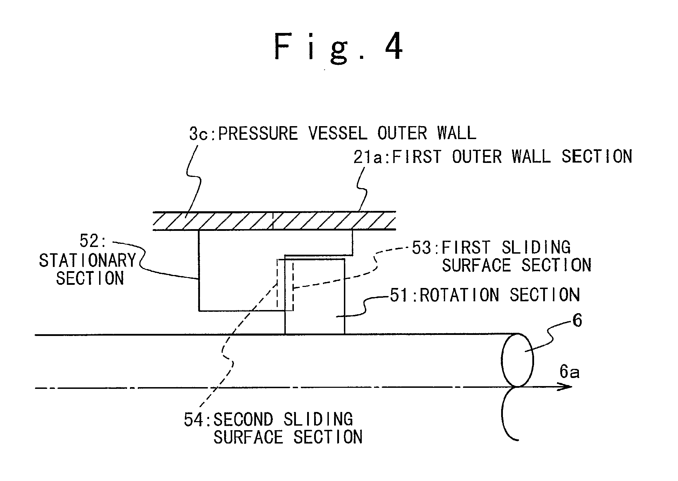

Fig. 4 shows the structure of the first dry gas seal 22. Referring to Fig. 4, the first dry gas seal 22 is composed of a rotation section 51 and a stationary section 52. The rotation section 51 is supported on the outer circumference surface of the rotation axis 6. The stationary section 52 is supported on the wall of the pressure vessel 3 and the first wall section 21a to be apart from the rotation axis 6. The rotation section 51 has a surface section approximately perpendicular to the rotation axis 6 on the side of the stationary section 52. A first slide surface section 53 is provided for the surface section of the rotation section 51. A spiral ditch is formed on the first slide surface section 53. Also, a second slide surface section 54 is a surface section approximately perpendicular to the rotation axis 6, and is provided for the stationary section 52 to contact the above first slide surface section 53. The second slide surface section 54 is formed as an approximately flat surface.

Next, the function of the first dry gas seal 22 will be described.

First, when the rotation section 51 is in a stationary state, the first slide surface section 53 and the second slide surface section 54 fit to each other. In this case, any the helium gas cannot pass through between the first slide surface section 53 and the second slide surface section 54.

Next, when rotation section 51 is in a rotation state, first force acts to the rotation section 51 and the stationary section 52 due to the spiral ditch provided for the first slide surface section 53 such that the first slide surface section 53 and the second slide surface section 54 is separated from each other. Also, at the same time, second force acts to the rotation section 51 and the stationary section 52 such that the first slide surface section 53 and the second slide surface section 54 contact each other, because the rotation section 51 and the stationary section 52 are fixed. With the balance between the first force and the second force, it is possible to form a small gap between the first slide surface section 53 and the second slide surface section 54. As a result, the stationary section 52 does not prevent the rotation of the rotation section 51. Moreover, because the gap between the first slide surface section 53 and the second slide surface section 54 is small, a little volume of helium gas passes through the gap. In this case, the helium gas passing through the gap flows from the first space section 21 to the second portion 3b. This is because the gas pressure P₁ of the helium gas in the first space section 21 is adjusted to be higher than the gas pressure P₂ of the helium gas in the second portion 3b by the first controller 31.

As described above, when the rotation section 51 is in the rotation state, it is possible to reduce a quantity of helium gas passing through the first dry gas seal 22 because the gap between the first slide surface section 53 and the second slide surface section 54 is small. Also, the first dry gas seal 22 can reduce a power loss of the rotation axis 6 because the first slide surface section 53 and the second slide surface section 54 does not contact. Moreover, the first dry gas seal 22 can seal the hot helium gas equal to or higher than 700 °C, because the first dry gas seal 22 does not use lubricating oil.

Next, the structure and function of the second dry gas seal 32 will be described. The second dry gas seal 32 has the same structure as that of the first dry gas seal 22 except that the stationary section 52 is fixed on the first wall section 21a and the second wall section 36a, similarly to the first dry gas seal 22.

Next, the function of the second dry gas seal 32 will be described. The function of the second dry gas seal 32 is the same as that of the first dry gas seal 22. Also, when the rotation section 51 is in the rotation state, a small quantity of the helium gas passes through the small gap between the first slide surface section 53 and the second slide surface section 54 and flows from the first space section 21 to the second space section 36. This is because the gas pressure P₁ of the helium gas in the first space section 21 is adjusted to be higher than the gas pressure P₃ of the helium gas in the second space section 36 by the second controller 38.

As described above, the second dry gas seal 32 can reduce a quantity of the helium gas passing through the second dry gas seal 32, like the first dry gas seal 22. Also, the second dry gas seal 32 can reduce a power loss of the rotation axis 6. Moreover, the second dry gas seal 32 can seal the hot gas equal to or higher than 700 °C.

Next, the structure and function of the third dry gas seal 39 will be described. The third dry gas seal 39 has the same structure as that of the first dry gas seal 22 except that the stationary section 52 is fixed on the second outer wall section 36a and the third wall section 40a, similarly to the first dry gas seal 22.

Next, the function of the third dry gas seal 39 will be described. The function of the third dry gas seal 39 is the same as that of the first dry gas seal 22. Also, when the rotation section 51 is in the rotation state, a small quantity of the helium gas passes through the small gap produced between the first slide surface section 53 and the second slide surface section 54 and flows from second space section 36 into the third space section 40. This is because the gas pressure P₃ of the helium gas in the second space section 36 is adjusted to be higher than the gas pressure P₄ of gas in the third space section 40 by the third controller 46.

As described above, the third dry gas seal 39 can reduce a quantity of helium gas passing through the third dry gas seal 39, like the first dry gas seal 22. Also, the third dry gas seal 39 can reduce a power loss of the rotation axis 6. Moreover, the third dry gas seal 39 can seal the hot gas equal to or higher than 700 °C .

Next, the open and close control operation of the pressure regulating valve 25 by the first controller 31 will be described.

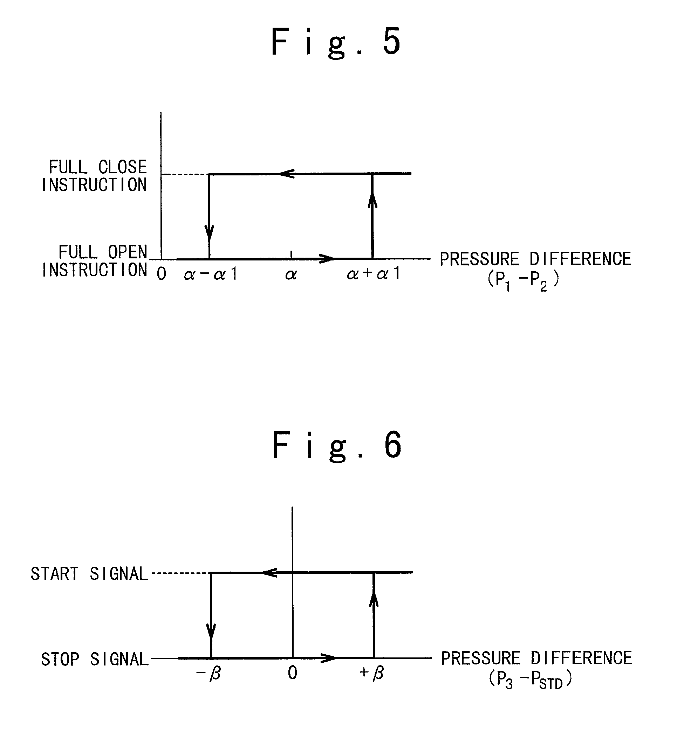

Fig. 5 is a graph showing relation of the pressure difference data transmitted from the pressure difference setting unit 30 and the control state of the open and close of the pressure regulating valve 25 by the first controller 31. Here, the horizontal axis in Fig. 5 indicates the pressure difference (P₁-P₂). Also, the vertical axis in Fig. 5 indicates the signal outputted from the first controller 31 to the pressure regulating valve 25. Referring to Fig. 5, first, when the pressure difference data is transmitted from the pressure difference setting unit 30 to the first controller 31 to indicate that the pressure difference of (P₁-P₂-α) is lower than the pressure of - α₁ (0<α₁< α), the first controller 31 transmits a full open instruction signal to the pressure regulating valve 25 such that the pressure regulating valve 25 is fully opened. The helium gas with the pressure P₀ (P₀ >> P₁) is supplied from the helium supply apparatus 26 to the first space section 21 through the helium gas buffer tank 24. Here, the pressure of α₁ is preset by the first controller 31.

Next, if the helium gas with the pressure P₀ (P₀ >> P₁) continues to be supplied from the helium supply apparatus 26 to the first space section 21, the pressure P₁ of the helium gas in the first space section 21 rises. In this case, when the pressure difference data is transmitted from the pressure difference setting unit 30 to the first controller 31 to indicate that the pressure difference (P₁-P₂-α) is equal to or higher than pressure of α₁, the first controller 31 transmits a full close instruction signal to the pressure regulating valve 25 such that the pressure regulating valve 25 is fully closed. As such, the supply of the helium gas from the helium supply apparatus 26 to the first space section 21 is stopped.

Next, when the supply of the helium gas from the helium supply apparatus 26 to the first space section 21 is stopped, a little quantity of helium gas in the first space section 21 leaks out through the first dry gas seal 22 and second dry gas seal 32. Therefore, the gas pressure P₁ of the helium gas in the first space section 21 decreases gradually. In this case, when the pressure difference data is transmitted from the pressure difference setting unit 30 to the first controller 31 to indicate that the pressure difference of (P₁-P₂-α) is lower than the pressure of -α₁, the first controller 31 transmits the full open instruction signal to the pressure regulating valve 25 such that the pressure regulating valve 25 is fully opened again.

As described above, the first controller 31 controls the pressure regulating valve 25 to keep a state in which the gas pressure P₁ in the first space section 21 is higher than the gas pressure P₂ in the second portion 3b of the pressure vessel 3. Also, the first controller 31 controls the pressure regulating valve 25 such that the gas pressure P₁ in the first space section 21 does not become higher by a constant value than the gas pressure P₂ in the second portion 3b of the pressure vessel 3.

In this case, it is desirable that a spare power (not shown) is connected with the pressure regulating valve 25. When the supply of the power for driving the pressure regulating valve 25 is stopped, the first controller 31 controls the pressure regulating valve 25 to be fully opened so as not for helium gas to leak from the second portion 3b of the pressure vessel 3.

Next, the control operation of the helium gas recirculation compressor 34 by the second controller 38 will be described. Fig. 6 is a graph showing relation of the pressure P₃ measured by the third pressure sensor 37 and the control state of the helium gas recirculation compressor 34 by the second controller 38. Here, the horizontal axis of Fig. 6 shows pressure difference (P₃-P_{STD}). The pressure P_{STD} is a reference pressure value preset by the second controller 38 and always satisfies the relation of P₄ < P_{STD} < P₁ and the relation of |P₁-P_{STD}| > |P_{STD}-P₄|, as described later. Also, the vertical axis of Fig. 6 shows the state of the control signal outputted from the second controller 38 to the helium gas recirculation compressor 34.

Referring to Fig. 6, first, when the pressure difference (P₃-P_{STD}) between the pressure P₃ measured by the third pressure sensor 37 and the pressure P_{STD} is lower than the pressure of -β (P₄ < P_{STD}-β < P_{STD}+β < P₁), the second controller 38 outputs a stop signal to the helium gas recirculation compressor 34. Here, the pressure β is preset by the second controller 38. The helium gas recirculation compressor 34 stops the operation in response to the stop signal. In the case, a little quantity of the helium gas is supplied from the first space section 21 to the second space section 36 through the second dry gas seal 32. Also, a little quantity of the helium gas leaks from the second space section 36 to the third space section 40 through the third dry gas seal 39. When the quantity of the helium gas supplied from the first space section 21 is more than the quantity of helium gas leaking out to the third space section 40, the gas pressure of the helium gas in the second space section 36 rises. Generally, when the pressure difference between two regions sealed by the dry gas seal is large, the quantity of the gas passing through the dry gas seal increases. Therefore, in this example, the pressure of P_{STD} is selected to always satisfy the relation of |P₁-P_{STD}| > |P_{STD}-P₄|.

Next, when the pressure difference (P₃-P_{STD}) becomes higher than the pressure β, the second controller 38 outputs an operation start signal to the helium gas recirculation compressor 34. The helium gas recirculation compressor 34 starts the operation in response to the operation start signal. In this case, because the helium gas recirculation compressor 34 collects the helium gas in the second space section 36, the gas pressure P₃ in the second space section 36 decreases.

Next, when the gas pressure P₃ in the second space section 36 decreases so that the pressure difference (P₃-P_{STD}) between the pressure P₃ measured by the third pressure sensor 37 and pressure P_{STD} becomes lower than the pressure of -β, the second controller 38 outputs the stop signal to stop the operation of the helium gas recirculation compressor 34 again.

As described above, the second controller 38 controls the operation of the helium gas recirculation compressor 34 to keep a state in which the gas pressure P₃ in the second space section 36 is lower than the gas pressure P₁ in the first space section 21 and is higher than the gas pressure P4 in the third space section 40.

In this case, it is desirable that the helium gas recirculation compressor 34 and the second controller 38 are connected with a spare power (not shown), such that the helium gas recirculation compressor 34 and the second controller 38 can operate, even when the supply of the power to the helium gas recirculation compressor 34 and the second controller 38 is cut down.

Next, the control operation of the vacuum suction unit 42 by the third controller 46 will be described.

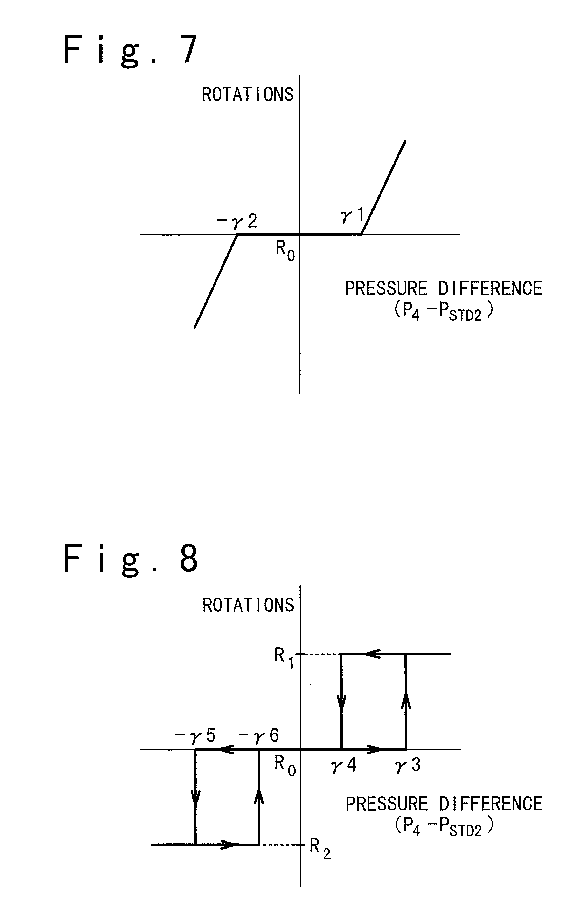

First, a first example of the control operation of the vacuum suction unit 42 by the third controller 46 will be described. Fig. 7 is the graph showing a relation of the pressure P₄ measured by fourth pressure sensor 45 and the control state of the vacuum suction unit 42 by the third controller 46 in the first example of the control operation of the vacuum suction unit 42 by the third controller 46. The horizontal axis of Fig. 7 shows pressure difference (P₄-P_{STD2}). The pressure P_{STD2} is a reference pressure value preset by the third controller 46 and fills within the range of 0 < P_{STD2} < Pₐ (Pₐ is atmospheric pressure). The vertical axis of Fig. 7 shows the number of rotations of the vacuum suction unit 42, i.e., an exhausted gas quantity. The vacuum suction unit 42 has a function to supply gas in the third space section 40 to the gas processing unit (not shown). When the number of rotations of the vacuum suction unit 42 increases, the vacuum suction unit 42 increases the supply quantity of gas in the third space section 40 to the gas processing unit. Also, when the number of rotations of the vacuum suction unit 42 decreases, the vacuum suction unit 42 decreases the supply quantity of gas in the third space section 40 to the gas processing unit.

Referring to Fig. 7, first, when the pressure P4 measured by the fourth pressure sensor 45 is approximately equal to the pressure P_{STD2}, the vacuum suction unit 42 is rotated in the preset number of rotations R₀.

Next, when the pressure difference (P₄-P_{STD2}) between the pressure P4 measured by the fourth pressure sensor 45 and the pressure P_{STD2} is higher than pressure γ₁ (γ₁>0), the third controller 46 increases the number of rotations of the vacuum suction unit 42. The pressure γ₁ is preset by the third controller 46. In this case, the third controller 46 sets the increment of the number of rotations continuously to be approximately proportional to the pressure (P₄-P_{STD2}-γ₁). As a result, when the number of rotations of the vacuum suction unit 42 increases, the vacuum suction unit 42 supplies more gas from the third space section 40 to the gas processing unit. Therefore, the gas pressure P4 in the third space section 40 decreases.

Also, when the pressure difference (P₄-P_{STD2}) between the pressure P4 measured by the fourth pressure sensor 45 and the pressure P_{STD2} is lower than the pressure of -γ₂ (γ₂>0), the third controller 46 decreases the number of rotations of the vacuum suction unit 42. The pressure γ₂ is preset by the third controller 46. In this case, the third controller 46 sets the decrement of the number of rotations continuously to be approximately proportional to pressure (P₄-P_{STD2}+γ₂). As a result, if the number of rotations of the vacuum suction unit 42 decreases, the vacuum suction unit 42 decreases the supply quantity of the gas from the third space section 40 to the gas processing unit. Therefore, the gas pressure P4 in the third space section 40 increases.

In this case, it is desirable that the vacuum suction unit 42 and the third controller 46 is connected with a spare power (not shown) the vacuum suction unit 42 and the third controller 46 can operate even when the supply of the power is cut off to the vacuum suction unit 42 and the third controller 46.

Next, a second example of the control operation of the vacuum suction unit 42 by the third controller 46 will be described.

Fig. 8 is a graph showing a relation of the pressure P4 measured by the fourth pressure sensor 45 and the control state of the vacuum suction unit 42 by the third controller 46 in the second embodiment of the control operation of the vacuum suction unit 42 by the third controller 46. Here, the horizontal axis of Fig. 8 shows pressure difference (P₄-P_{STD2}). The pressure P_{STD2} is a reference pressure value preset by the third controller 46 and fills within a range of 0 < P_{STD2} < Pₐ (Pₐ is atmospheric pressure). The vertical axis of Fig. 8 shows the number of rotations of the vacuum suction unit 42. Here, the structure and function of the vacuum suction unit 42 are the same as those of the vacuum suction unit 42 in the first example of the control action shown in the above.

Referring to Fig. 8, first, when the pressure P4 measured by the fourth pressure sensor 45 is approximately equal to pressure P_{STD2}, the vacuum suction unit 42 is rotated in the preset number of rotations R₀.

Next, the pressure difference (P₄-P_{STD2}) between the pressure P₄ measured by the fourth pressure sensor 45 and the pressure P_{STD2} is higher than the pressure γ₃ (γ₃>0), the third controller 46 controls to increase the number of rotations of the vacuum suction unit 42 to R₁ (R₁>R₀). Here, the pressure γ₃ is preset by the third controller 46. Also, the number of rotations R₁, too, is preset by the third controller 46. As a result, if the number of rotations of the vacuum suction unit 42 increases, the vacuum suction unit 42 supplies more gas from the third space section 40 to the gas processing unit. Therefore, the gas pressure P₄ in the third space section 40 decreases.

Thereafter, when the pressure difference (P₄-P_{STD2}) between the pressure P4 measured by the fourth pressure sensor 45 and the pressure P_{STD2} is decreased below the pressure γ₄ (0<γ₄<γ₃), the third controller 46 returns the number of rotations of the vacuum suction unit 42 to R₀. In this case, the pressure γ₄ is preset by the third controller 46.

Also, when the pressure difference (P₄-P_{STD2}) between the pressure P₄ measured by the fourth pressure sensor 45 and the pressure P_{STD2} is lower than the pressure of -γ₅ ( γ₅>0), the third controller 46 decreases the number of rotations of the vacuum suction unit 42 to R₂ (R₂<R₀). In this case, the pressure γ₅ is preset by the third controller 46. Also, the number of rotations R₂, too, is preset by the third controller 46. As a result, if the number of rotations of the vacuum suction unit 42 decreases, the vacuum suction unit 42 decreases the supply quantity of the gas from the third space section 40 to the gas processing unit. Therefore, the gas pressure P₄ in the third space section 40 increases.

Thereafter, when the pressure difference (P₄-P_{STD2}) between the pressure P4 measured by the fourth pressure sensor 45 and the pressure P_{STD2} is increased to a value higher than the pressure γ₆ (0<γ₆<γ₅), the third controller 46 returns the number of rotations of the vacuum suction unit 42 to R₀. In this case, the pressure γ₆ is preset by the third controller 46.

In this case, it is desirable that a spare power (not shown) is connected with the vacuum suction unit 42 and the third controller 46 such that the vacuum suction unit 42 and the third controller 46 can operate even when the supply of the power is cut off to the vacuum suction unit 42 and the third controller 46.

Next, as a modification example of the axis seal device according to the present invention, it is possible to further include M space sections (M is an integer satisfying M≧1) connected with the second space section 36 through the dry gas seal. In this case, the space sections adjacent to each other are sealed by the dry gas seal, and each of the space sections is a region defined by the outer wall section like the second outer wall section 36a and the rotation axis 6. Also, the structure and function of the dry gas seal are the same as the first dry gas seal 22.

The arrangement of the M space sections is shown below. First, the first space section is provided adjacent to the second section 3b in the direction of the axis direction 6a. Also, the (L+1)-th space section is provided adjacent to the L-th (L is an integer satisfying 1 ≦ L < M) space section into the direction of the axis direction 6a. Moreover, the third space section 40 is provided adjacent to the M-th space section in the direction of the axis direction 6a.

The L-th space section is connected with the pipe which passes through an outer wall section like the second space section 36. In case of L ≧ 2, the pipe is connected from the L-th space section to the (L-1)-th space section through a L-th buffer tank for the helium gas recirculation and the L-th helium gas recirculation compressor. Also, in case of L = 1, the pipe is connected from the L-th space section to the second space section through the first buffer tank for the helium gas recirculation and the first helium gas recirculation compressor. Here, the structure and function of the L-th buffer tank for the helium gas recirculation are the same as those of the buffer tank 35 for the helium gas recirculation connected with the second space section 36. Also, the structure and function of the L-th helium gas recirculation compressor, too, are the same as those of the helium gas recirculation compressor 34 connected with the second space section 36.

Moreover, like the second space section 36, the L-th pressure sensor is provided in the L-th space section to measure the gas pressure of the L-th space section. The L-th pressure sensor is connected with a L-th controller to control the operation of the helium gas recirculation compressor. In this case, the function of the L-th controller is the same as that of the second controller 38 excluding that the pressure P_{STD} as the reference pressure value preset by the second controller 38 is different. Supposing that the reference pressure value preset by the L-th controller is P_{STD(L)}, P_{STD(L)} is set to satisfy the relation of P_{STD(L-1)}-β > P_{STD(L)}+β in case of 2 ≦ L < M . Also, in case of L=1, the pressure P_{STD(1)} is set to satisfy the relation of P_{STD}-β > P_{STD(1)}+β. Moreover, in case of L=M, the pressure P_{STD(M)} is set to satisfy P_{STD(M-1)}-β > P_{STD(M)}+β and P_{STD(M)}-β > P_{STD2}. In this case, the pressure β is preset by the L-th controller and the second controller 38. Also, the pressure P_{STD2} is the reference pressure value preset by the third controller 46.

As shown in the above, the gas pressure in the L-th space section is controlled to be always lower than the gas pressure in the (L-1)-th space section. Thus, a little quantity of gas flows from the (L-1)-th space section to the L-th space section at the dry gas seal sealing between the L-th space section and the (L-1)-th space section, when the rotation axis 6 is in the rotation state. These M space sections permit a little quantity of helium gas to flow from the second space section 36 to the third space section 40, but prevent gas from flowing from the third space section 40 to the second space section 36, when the rotation axis 6 is in the rotation state.

As described above, in the helium gas turbine power generation system of the present invention, the turbine is arranged in the pressure vessel and the power generator is arranged outside the pressure vessel by using an axis seal device. Therefore, in the helium gas turbine power generation system of the present invention, the pressure vessel can be made small by the size of the generator, compared with a conventional example.

Also, in the helium gas turbine power generation system of the present invention, the maintenance process of the helium gas turbine power generation system of the pressure vessel can be reduced.

In addition, in the axis seal device of the present invention, when the turbine is arranged in the pressure vessel and the generator is arranged outside the pressure vessel in the relatively large-scaled helium gas turbine power generation system, it is possible to seal the rotation axis portion between the turbine and the generator such that the helium gas circulating in the pressure vessel does not leak out outside the pressure vessel.

## Claims

1. An axis seal device provided between a vessel filled with a first gas of a first gas pressure and a rotation axis as a rotary shaft which passes through said vessel, comprising:
a first dry gas seal section provided between said rotation axis and said vessel such that said rotation axis is rotatable, and having a first space section with a second gas pressure;
a second dry gas seal section provided subsequently to said first dry gas seal section between said rotation axis and said vessel such that said rotation axis is rotatable, and having a second space section with a third gas pressure; and
a third dry gas seal section provided subsequently to said second dry gas seal section between said rotation axis and said vessel such that said rotation axis is rotatable, and having a third space section with a fourth gas pressure,
wherein said first gas pressure is lower than said second gas pressure, said second gas pressure is higher than said third gas pressure, said third gas pressure is higher than said fourth gas pressure and an atmospheric pressure, and said fourth gas pressure is lower than said atmospheric pressure.

2. The axis seal device according to claim 1, wherein said first dry gas seal section comprises:
a first gas pressure control section which controls said second gas pressure such that said second gas pressure is higher than said first gas pressure.

3. The axis seal device according to claim 2, wherein said first gas pressure control section comprises:
a first pressure sensor provided in said vessel to sense said first gas pressure;
a second pressure sensor provided in said first space section to sense said second gas pressure;
a gas supply unit which supplies gas of a gas pressure higher than said second gas pressure into said first space section;
a valve connected with said first space section and said gas supply unit; and
a first control section which controls said valve for said gas supply unit to supply said gas into said first space section based on said first gas pressure sensed by said first pressure sensor and said second gas pressure sensed by said second pressure sensor such that said second gas pressure is higher than said first gas pressure.

4. The axis seal device according to claim 3, wherein said first control section controls said valve based on said first gas pressure sensed by said first pressure sensor and said second gas pressure sensed by said second pressure sensor for said gas supply unit to supply said gas into said first space section to have a hysteresis characteristic in a predetermined first range such that said second gas pressure is always higher than said first gas pressure.

5. The axis seal device according to any of claims 2 to 4, wherein said first space section is defined by said rotation axis, a wall of said axis seal device, a first dry gas seal and a second dry gas seal, and
said first dry gas seal is opened to an inside of said vessel, and said second dry gas seal is shared by said second space section.

6. The axis seal device according to any of claims 1 to 5, wherein said third dry gas seal section comprises:
a third gas pressure control section which controls said fourth gas pressure such that said fourth gas pressure is lower than said third gas pressure and said atmospheric pressure.

7. The axis seal device according to claim 6, wherein said third gas pressure control section comprises:
a fourth pressure sensor provided in said third space section to sense said fourth gas pressure;
a gas exhausting unit connected said third second space section; and
a third control section which controls said gas exhausting unit based on said fourth gas pressure sensed by said fourth pressure sensor such that said fourth gas pressure is lower than said third gas pressure and said atmospheric pressure.

8. The axis seal device according to claim 7, wherein said third control section controls said gas exhausting unit to have a hysteresis characteristic in a predetermined third range based on said fourth gas pressure sensed by said fourth pressure sensor such that said fourth gas pressure is lower than said third gas pressure and said atmospheric pressure.

9. The axis seal device according to any of claims 6 to 8, wherein said third space section is defined by said rotation axis, a wall of said axis seal device, a third dry gas seal and a labyrinth seal, and
said labyrinth seal is opened to atmosphere, and said third dry gas seal is shared by said second space section.

10. The axis seal device according to any of claims 1 to 9, wherein said second dry gas seal section comprises:
a second gas pressure control section which controls said third gas pressure such that said third gas pressure is lower than said second gas pressure and higher than said atmospheric pressure.

11. The axis seal device according to claim 10, wherein said second gas pressure control section comprises:
a third pressure sensor provided in said second space section to sense said third gas pressure;
a gas recirculation unit which recirculates gas from said second space section into said first space section; and
a second control section which controls said gas recirculation unit based on said third gas pressure sensed by said third pressure sensor such that said third gas pressure is lower than said second gas pressure and higher than said atmospheric pressure.

12. The axis seal device according to claim 11, wherein said second control section controls said gas recirculation unit to have a hysteresis characteristic in a predetermined second range based on said third gas pressure sensed by said third pressure sensor such that said third gas pressure is lower than said second gas pressure and always higher than said atmospheric pressure.

13. The axis seal device according to any of claims 10 to 12, wherein said second space section is defined by said rotation axis, a wall of said axis seal device, a second dry gas seal and a third dry gas seal, and said second dry gas seal is shared by said first space section and said third dry gas seal is shared by said third space section.

14. The axis seal device according to any of claims 1 to 9, wherein said second dry gas seal section comprises N dry gas seal subsections (N is an integer more than 1) connected in series, and said second space section comprises N space subsections,
an M-th(2≦M≦N) one of said N dry gas seal subsections comprises:
a M-th space subsection; and
a second gas pressure control section which controls an M-th gas pressure of said M-th space subsection such that said M-th gas pressure of said M-th space subsection is lower than an (M-1)-th gas pressure of an (M-1)-th space subsection and higher than an (M+1)-th gas pressure of an (M+1)-th space subsection and said atmospheric pressure.

15. The axis seal device according to claim 14, wherein said M-th gas pressure control section comprises:
a M-th pressure sensor provided in said M-th space subsection to sense said M-th gas pressure;
a M-th gas recirculation unit which recirculates gas from said M-th space subsection into said (M-1)-th space subsection; and
a M-th control section which controls said M-th gas recirculation unit based on said M-th gas pressure sensed by said M-th pressure sensor such that said M-th gas pressure of said M-th space subsection is lower than an (M-1)-th gas pressure of an (M-1)-th space subsection and higher than an (M+1)-th gas pressure of an (M+1)-th space subsection and said atmospheric pressure.

16. The axis seal device according to claim 15, wherein said M-th control section controls said M-th gas recirculation unit to have a hysteresis characteristic in a predetermined range based on said M-th gas pressure sensed by said M-th pressure sensor such that said M-th gas pressure of said M-th space subsection is lower than an (M-1)-th gas pressure of an (M-1)-th space subsection and higher than an (M+1)-th gas pressure of an (M+1)-th space subsection and said atmospheric pressure.

17. The axis seal device according to any of claims 14 to 16, wherein said M-th space subsection is defined by said rotation axis, a wall of said axis seal device, an (M-1)-th dry gas seal and an M-th dry gas seal, and said (M-1)-th dry gas seal is shared by said (M-1)-th space subsection and said M-th dry gas seal is shared by said (M+1)-th space section.

18. The axis seal device according to any of claims 1 to 16, wherein said gas is a helium gas.

19. The axis seal device according to claim 18, wherein said gas is in a temperature range of 700 °C to 1000 °C.

20. A gas turbine power generation system comprising:
a gas reactor which heats up said gas to produce a hot gas;
said vessel connected to said gas reactor;
a turbine accommodated in said vessel and rotated by said hot gas;
a separator member provided for said vessel and said turbine to separate an inside of said vessel into first and second portions;
a power generator provided outside said vessel and connected to said turbine by said rotation axis; and
said axis seal device according to any of claims 1 to 19, provided between said rotation axis and said vessel.

21. The gas turbine power generation system according to claim 20, further comprising:
a circulating unit which circulates said hot gas from said second portion into said first portion.

22. A method of sealing between a first portion filled with a gas and a second portion in atmosphere, comprising the step of:
providing first to third space sections between said first portion and said second portion;
controlling a second gas pressure in said first space section to be higher than a first gas pressure in a first portion;
controlling a third gas pressure in said second space section to be lower than a fourth gas pressure in said third space section and to be higher than an atmospheric pressure; and
controlling said fourth gas pressure to be lower than said atmospheric pressure.

23. The method according to claim 22, wherein a first dry gas seal is provided between said first portion and said first space section, a second dry gas seal is provided between said first space section and said second space section, and a third dry gas seal is provided between said second space section and said third space section.
